# EUROPEAN PATENT SPECIFICATION

(11) **EP 0 570 460 B1**
(45) Date of publication and mention of the grant of the patent: **28.12.1994**
(21) Application number: 92904686.0
(22) Date of filing: 30.01.1992
(51) Int. Cl.: D06M 15/11, C08L 3/02

(54) **FINISHING COMPOSITION**
AUSRÜSTUNGS-ZUSAMMENSETZUNG
COMPOSITION DE FINITION

(30) Priority: 07.02.1991 SE 9100384
(43) Date of publication of application: 24.11.1993
(73) Proprietor: SVERIGES STÄRKELSEPRODUCENTER, FÖRENING UPA, 374 22 Karlshamn (SE)
(72) Inventor: BJÖRKLUND, Hans, S-283 00 Osby (SE); PETTERSSON, Lena, S-260 60 Broby (SE)
(74) Representative: Wiklund, Erik
(86) International application number: SE9200057
(87) International publication number: WO9213988

(56) References cited:
- EP-A- 0 255 859
- GB-A- 1 444 498
- Chemical Abstracts, volume 110, no. 6, 6 February 1989, (Columbus, Ohio, US), see page 78, abstract 40464a, & JP,A,63221102 (Manufacture of processed starch as fabric sizing agent for improved luster uniformity) 14 September 1988
- Chemical Abstracts, volume 73, no. 18, 2 November 1970, (Columbus, Ohio, US), see page 64, abstract 89097q, & JP,A,7012557 (Size mixture for hydrophobic weaving yarns.) 7 May 1970

## Description

The present invention relates to a finishing composition and to its use for finishing fibre-glass fabric.

It is previously known to finish a textile material in order to improve one or more of its qualities. Thus, it is possible to improve e.g. the handle, the water resistance and the flame-proofness of the textile material by applying a suitable finishing composition. The textile material may be woven or non-woven and be made of natural and/or synthetic fibres.

In particular, it is known to finish fibre-glass fabric in order to give the initially rather shapeless fabric a firmer and better handle. The finishing composition employed may also impart flame-proofness. If the fabric is to be exposed to moisture and damp, the finishing composition may also impart hydrophobicity to the fabric. This is the case e.g. when glueing and/or painting woven wallpaper, and is of particular interest for so-called bituminous fabrics, i.e. fibre-glass fabrics currently used instead of paper or paperboard for making roofing felt.

In the finishing of bituminous fabric, use has hitherto been made of finishing compositions based on synthetic binders, such as polyvinyl alcohol, polyvinyl acetate and polyvinyl chloride, combined with hydrophobicity-imparting agents, such as paraffin. Quality requirements on roofing felt are extremely high, and have, in general opinion, only been met by finishing compositions based on synthetic binders imparting satisfactory water resistance and hydrophobicity. It has not been considered possible to use starch-base finishing compositions, since starch in itself has poor water resistance and hydrophobicity, and also is liable to be attacked by bacteria, fungi and mould, especially where the air is humid.

The object of the present invention is to obviate the inconveniences mentioned above and provide a finishing composition which is to be applied to textile materials and which is based on starch but nevertheless imparts satisfactory water resistance and hydrophobicity to the textile material.

According to the invention, this object is achieved by a finishing composition which, on the basis of dry weight, contains at least 60% by weight of starch, 4-30% by weight of a hydrophobicity-imparting agent, 1-10% by weight of a salt of metals in groups 3a, 3b, 4a, 4b, 5a, 5b of the Periodic Table, and 1-5% by weight of citric acid, the sum of these components being 100% by weight.

Other features of the invention appear from the following description and the appended claims.

The main ingredient of the finishing composition according to the invention is starch, which may be based on various raw materials, such as potato, wheat, maize, waxy maize, tapioca barley, and/or combinations thereof. Further, the starch can be modified in different ways, e.g by acid degradation, oxidation, esterification, etherification, cross-linking, and/or combinations thereof. Preferably, the starch is soluble in cold water, but also starch that is soluble in hot water can be used.

Starch is the main ingredient in the finishing composition according to the invention, and constitutes at least 60% by weight, preferably about 75-85% by weight, and most preferred about 80% by weight of the composition, as based on dry weight.

The hydrophobicity-imparting agent in the composition according to the invention makes up 4-30% by weight, preferably about 16-22% by weight, and most preferred about 19% by weight of the composition, as based on dry weight. The hydrophobicity-imparting agent can be selected from known agents, such as oils, waxes and fluorinated, preferably perfluorinated, organic compounds. At present, paraffin wax is the most preferred hydrophobicity-imparting agent.

The composition further contains 1-10% by weight, preferably about 4-8% by weight, and most preferred about 6% by weight of a salt of metals in groups 3a, 3b, 4a, 4b, 5a, 5b of the Periodic Table, i.e. the one referred to in the Handbook of Chemistry and Physics, 49th Edition, 1968, published by the Chemical Rubber Co. Generally, the metals at issue can form ions having a valency of 3 or more. The metals being part of the above groups include aluminium, zirconium and antimony. Aluminium is the metal currently preferred. It is assumed that the nature of the salt is not especially critical, but the salt can be chosen from those salts which are completely or partly dissociated in an aqueous solution. At present, aluminium hydroxy chloride (Al₂(OH)₅Cl.2H₂O) is especially preferred. Under the conditions described, the metallic salt in the composition according to the invention is supposed to serve as a mordant for the starch component to make the latter adhere better to the textile material to which the finishing composition is applied, and as a cross-linking agent for the starch component.

Finally, also citric acid is a component of the composition according to the invention. The citric acid constitutes 1-5% by weight, preferably about 2-3% by weight, and most preferred about 2.5% by weight of the composition, as based on dry weight. The citric acid adjusts the pH of the composition, but probably performs other important functions as well, since it has been found in tests that only citric acid functions satisfactorily in the invention. The use of other acids, such as adipic acid, fumaric acid, maleic acid, oxalic acid as well as acetic acid, has given unsatisfactory results. It is presumed that the citric acid forms a complex with metal ions of the metallic salt, but this is not absolutely certain.

It should be pointed out that the sum of the indicated contents in per cent of the components of the composition amounts to 100% by weight.

It has been found that it is advantageous to the production and handling of the finishing composition according to the invention to combine the starch with the citric acid to form one component, and to combine the hydrophobicity-imparting agent with the metallic salt to form one component, so that the composition in practice is a mixture of two components. The starch and the citric acid are combined by being mixed and dried together to a dry starch powder of which the citric acid forms part. The hydrophobicity-imparting agent and the metallic salt are mixed in water to form an emulsion having a solids content of about 30-40% by weight, preferably about 34-36% by weight.

When the composition is to be used for finishing textile materials, the components are mixed in water to form a suspension having a solids content of about 10-30% by weight, preferably about 15-20% by weight. Normally, the starch is first dissolved in water, whereupon the other components are admixed. In the preferred mode of execution, in which the starch is combined with the citric acid and the hydrophobicity-imparting agent is combined with the metallic salt, the starch and the citric acid are first dissolved in water, whereupon the hydrophobicity-imparting agent and the metallic salt are added as an emulsion.

Conveniently, the ready-to-use composition contains a sufficient amount of an emulsifier to form a stable emulsion. However, the amount of emulsifier is negligible in relation to the entire composition and is therefore not referred to in the following.

When the finishing composition has been prepared as above, the suspension is applied to the textile material in known manner, e.g. by a foulard method, whereupon the thus-finished textile material is dried at about 140-160°C for about 1-3 min.

The invention will now be elucidated further by the following, non-restricting Examples.

### EXAMPLE 1

Finishing compositions according to the invention were prepared. The starch component employed consisted of oxidised and acetylated potato/wheat starch of the type Perlgum SB from Lyckeby Stärkelseförädling AB, Kristianstad, Sweden. This starch also contained about 2.5% by weight of citric acid. The hydrophobicity-imparting agent and the metallic salt employed consisted of a combination of paraffin wax and aluminium hydroxy chloride as an aqueous emulsion having a solids content of about 34% by weight, this emulsion being marketed under the name of Perltex E by Lyckeby Stärkelseförädling AB, Kristianstad, Sweden. Perltex E contains about 25% by weight of paraffin wax and about 8% by weight of aluminium hydroxy chloride, as based on the total Perltex E emulsion. In addition, it contains a negligible amount of emulsifier.

Ready-to-use finishing compositions were prepared by first dissolving the starch powder in water and stirring it for about 0.5 h. Then, a given amount of the Perltex E emulsion was added under agitation, which continued until a homogenous suspension had been obtained. The solids content of the prepared suspension was about 10-15% by weight. The composition of the different finishing compositions appear from Table 1. The amounts of starch, citric acid, paraffin wax and aluminium salt are given within parentheses in Table 1.

**TABLE 1**

| TESTS | 1 | 2 | 3 | 4 | 5 | 6 |
|---|---|---|---|---|---|---|
| Perlgum SB (g) | 100 | 120 | 100 | 100 | 120 | 100 |
| starch (g) | (97.5) | (117) | (97.5) | (97.5) | (117) | (97.5) |
| citric acid (g) | (2.5) | (3) | (2.5) | (2.5) | (3) | (2.5) |
| Perltex E (g) | 40 | 60 | 60 | 80 | 80 | 100 |
| paraffin wax (g) | (10.4) | (15.6) | (15.6) | (20.8) | (20.8) | (26) |
| Al salt (g) | (3.2) | (4.8) | (4.8) | (6.4) | (6.4) | (8) |
| Water | to 1000 ml | | | | | |

The resulting finishing suspensions had excellent flow properties and contained no agglomerates. All the suspensions showed thixotrope qualities.

The suspension was subsequently used for finishing a textile material in the form of a fibre-glass fabric of the type used for bituminous fabrics. Finishing was performed by manually applying to the fibre-glass fabric and with the aid of a spreading rod such an amount of the suspension that the finished fabric contained about 15% by weight of the finishing composition after drying at about 150°C for 3 min. Then, samples were taken of the fibre-glass fabrics in the form of strips measuring 3 x 10 cm. These strips were put standing in coloured water in a 100-ml glass jar. Depending on the degree of water resistance or hydrophobicity of the finished fibre-glass fabric, the strips sink about 5-7 cm in the water at the beginning of the test. If the water resistance or hydrophobicity is to be regarded as satisfactory, the fabric must not absorb any water above the surface of water when stored thus for 24 hours. If the fabric absorbs the water, the coloured water can be seen to rise in the fabric above the water surface. If the water resistance is extremely poor, the fabric under water will divide.

When applying compositions 1-6, above, excellent results as to water resistance and hydrophobicity were obtained in all cases, and the hydrophobicity increased from composition 1 to composition 6. Especially advantageous results as to water resistance and hydrophobicity were obtained with compositions 3-5.

When the citric acid was replaced with other organic acids and the tests were repeated, the results were unsatisfactory and involved e.g. gelation, agglomeration, as well as poor water resistance and hydrophobicity. The acids tested were acetic acid, adipic acid, fumaric acid, maleic acid and oxalic acid.

### EXAMPLE 2

Example 1 was repeated, but with the finishing compositions indicated in Table 2.

**TABLE 2**

| TESTS | 7 | 8 | 9 | 10 |
|---|---|---|---|---|
| Perlgum SB (g) | 120 | 120 | 80 | 80 |
| starch (g) | (117.1) | (114.2) | (78.1) | (76.2) |
| citric acid (g) | (2.9) | (5.8) | (1.9) | (3.8) |
| Perltex E (g) | 20 | 20 | 120 | 120 |
| paraffin wax (g) | (5.2) | (5.2) | (31.2) | (31.2) |
| Al salt (g) | (1.6) | (1.6) | (9.6) | (9.6) |
| Water | to 1000 ml | | | |

The finishing compositions in Tests 7 and 8 contained a high amount of starch and a low amount of hydrophobicity-imparting agent, and consequently resulted in a lower water resistance and hydrophobicity than did the compositions in Tests 9 and 10 when applied to fibre-glass fabric, as indicated in Example 1.

## Claims

1. A finishing composition for textile materials, **characterised** in that it, on the basis of dry weight, contains at least 60% by weight of starch, 4-30% by weight of a hydrophobicity-imparting agent, 1-10% by weight of a salt of metals in groups 3a, 3b, 4a, 4b, 5a, 5b of the Periodic Table, and 1-5% by weight of citric acid, and in that the sum of these components amounts to 100% by weight.

2. A finishing composition as claimed in claim 1, **characterised** in that the hydrophobicity-imparting agent is a paraffin wax.

3. A finishing composition as claimed in claim 1 or 2, **characterised** in that the metal in the metallic salt is chosen from aluminium, zirconium and antimony.

4. A finishing composition as claimed in claim 3, **characterised** in that the metallic salt is an aluminium salt.

5. A finishing composition as claimed in claim 4, **characterised** in that the aluminium salt is aluminium hydroxy chloride.

6. A finishing composition as claimed in any one of the preceding claims, **characterised** in that it contains about 75-85% by weight of starch.

7. A finishing composition as claimed in any one of claims 1-6, **characterised** in that the composition is obtained by admixing two components, the first component being obtained by combining the starch with the citric acid, and the second component being obtained by combining the hydrophobicity-imparting agent with the metallic salt.

8. A finishing composition as claimed in claim 7, **characterised** in that the hydrophobicity-imparting agent and the metallic salt are in the form of an aqueous emulsion of about 30-40% by weight.

9. A finishing composition as claimed in any one of the preceding claims, **characterised** in that the ready-to-use composition is a suspension of about 10-30% by weight.

10. Use of a finishing composition as set forth in any one of the preceding claims for finishing fibre-glass fabric.

## Patentansprüche

1. Nachbehandlungsmittel für Textilien, dadurch gekennzeichnet, daß es, bezogen auf das Trockengewicht, mindestens 60 Gewichts-% Stärke, 4 - 30 Gewichts-% eines Hydrophobierungsmittels, 1 - 10 Gewichts-% eines Salzes eines Metalls aus den Gruppen 3a, 3b, 4a, 4b, 5a, 5b des Periodensystems und 1 - 5 Gewichts-% Zitronensäure enthält, wobei die Summe dieser Bestandteile 100 Gewichts-% beträgt.

2. Nachbehandlungsmittel gemäß Anspruch 1, dadurch gekennzeichnet, daß das Hydrophobierungsmittel ein Paraffinwachs ist.

3. Nachbehandlungsmittel gemäß Anspruch 1 oder 2, dadurch gekennzeichnet, daß das Metall des Metallsalzes Aluminium, Zirkon oder Antimon ist.

4. Nachbehandlungsmittel gemäß Anspruch 3, dadurch gekennzeichnet, daß das Metallsalz ein Aluminiumsalz ist.

5. Nachbehandlungsmittel gemäß Anspruch 4, dadurch gekennzeichnet, daß das Aluminiumsalz Aluminiumhydroxychlorid ist.

6. Nachbehandlungsmittel gemäß einem der vorhergehenden Ansprüche, dadurch gekennzeichnet, daß es etwa 75 - 85 Gewichts-% Stärke enthält.

7. Nachbehandlungsmittel gemäß einem der Ansprüche 1 - 6, dadurch gekennzeichnet, daß es durch Mischen zweier Komponenten erhalten wurde, von denen die erste Komponente durch Vereinigung der Stärke mit der Zitronensäure und die zweite Komponente durch Vereinigung des Hydrophobierungsmittels mit dem Metallsalz erhalten wurde.

8. Nachbehandlungsmittel gemäß Anspruch 7, dadurch gekennzeichnet, daß das Hydrophobierungsmittel und das Metallsalz in Form einer etwa 30 - 40 Gewichts-% igen wässrigen Emulsion vorliegen.

9. Nachbehandlungsmittel gemäß einem der vorhergehenden Ansprüche, dadurch gekennzeichnet, daß das gebrauchsfertige Mittel eine Suspension mit ungefähr 10 - 30 Gewichts-% darstellt.

10. Verwendung eines Nachbehandlungsmittels gemäß einem der vorhergehenden Ansprüche zur Behandlung von Glasfasergeweben.

## Revendications

1. Composition d'apprêt pour textiles, caractérisée en ce qu'elle contient, sur une base en poids de matière sèche, au moins 60 % en poids d'amidon, 4 à 30 % en poids d'un agent conférant un caractère hydrophobe, 1 à 10 % en poids d'un sel de métaux des groupes 3a, 3b, 4a, 4b, 5a, 5b du Tableau Périodique et 1 à 5 % en poids d'acide citrique et en ce que la somme de ces composants est de 100 % en poids.

2. Composition d'apprêt selon la revendication 1, caractérisée en ce que l'agent conférant un caractère hydrophobe est une cire de paraffine.

3. Composition d'apprêt selon la revendication 1 ou 2, caractérisée en ce que le métal du sel métallique est sélectionné parmi l'aluminium, le zirconium et l'antimoine.

4. Composition d'apprêt selon la revendication 3, caractérisée en ce que le sel métallique est un sel d'aluminium.

5. Composition d'apprêt selon la revendication 4, caractérisée en ce que le sel d'aluminium est du chlorure d'hydroxyaluminium.

6. Composition d'apprêt selon l'une quelconque des revendications précédentes, caractérisée en ce qu'elle contient environ 75 à 85 % en poids d'amidon.

7. Composition d'apprêt selon l'une quelconque des revendications 1 à 6, caractérisée en ce que la composition est obtenue par mélange de deux composants, le premier composant étant obtenu par association de l'amidon à l'acide citrique et le second composant étant obtenu par association de l'agent conférant le caractère hydrophobe au sel métallique.

8. Composition d'apprêt selon la revendication 7, caractérisée en ce que l'agent conférant un caractère hydrophobe et le sel métallique se présentent sous la forme d'une émulsion aqueuse d'environ 30 à 40 % en poids.

9. Composition d'apprêt selon l'une quelconque des revendications précédentes, caractérisée en ce que la composition prête à l'emploi est une suspension d'environ 10 à 30 % en poids.

10. Emploi d'une composition d'apprêt selon l'une quelconque des revendications précédentes pour l'apprêtage d'un tissu de fibres de verre.
